# EUROPÄISCHE PATENTSCHRIFT

(11) **EP 3 818 223 B1**
(45) Veröffentlichungstag und Bekanntmachung des Hinweises auf die Patenterteilung: **06.04.2022**
(21) Anmeldenummer: 19742279.3
(22) Anmeldetag: 27.06.2019
(51) Int. Cl.: E05B 81/20, E05B 81/62

(54) **SCHLOSS MIT ZUZIEHEINRICHTUNG FÜR EIN KRAFTFAHRZEUG**
LOCK COMPRISING A CLOSING DEVICE FOR A MOTOR VEHICLE
SERRURE DE VÉHICULE À MOTEUR MUNIE D'UN DISPOSITIF DE FERMETURE

(30) Priorität: 05.07.2018 DE 102018116285
(43) Veröffentlichungstag der Anmeldung: 12.05.2021
(73) Patentinhaber: Kiekert AG, 42579 Heiligenhaus (DE)
(72) Erfinder: REUSCH, Manuel, 40589 Düsseldorf (DE)
(86) Internationale Anmeldenummer: PCT/DE2019/100600
(87) Internationale Veröffentlichungsnummer: WO 2020/007409

(56) Entgegenhaltungen:
- WO-A1-2011/065226
- DE-A1-102016 121 083
- DE-A1-102017 101 704

## Beschreibung

Die Erfindung betrifft ein Schloss für ein Kraftfahrzeug aufweisend ein Gesperre aus einer Drehfalle und mindestens einer Sperrklinke, einer Zuzieheinrichtung mit einem elektrischen Antrieb, wobei das Gesperre mittels der Zuzieheinrichtung von einer Öffnungsposition, insbesondere einer Vorrastposition, in zumindest eine Hauptrastposition überführbar ist und einer Steuereinheit für den Zuziehantrieb, wobei in Abhängigkeit einer Messgröße des Zuziehantriebs ein Zuziehvorgang unterbindbar ist. Ein solches Schloss ist z.B. in den Dokumenten WO2011065226 A1 und DE102016121083 A1 offenbart.

In heutige Kraftfahrzeuge werden mehr und mehr Komfortfunktionen integriert, um eine möglichst einfache Bedienung des Kraftfahrzeugs zu ermöglichen. So ist es beispielsweise bekannt, dass Kraftfahrzeugtüren, -klappen oder -hauben mittels einer Zuzieheinrichtung geschlossen werden. Dies kann einerseits darin begründet sein, dass ein leichtes Schließen der Tür ermöglicht werden soll und andererseits darin begründet liegen, dass zum Beispiel auf einen Türaußengriff verzichtet werden soll, um ein entsprechendes Design zu erzielen oder die Bedienung zu vereinfachen, indem die Tür selbständig schließbar ausgeführt ist. Insbesondere bei vollautomatischen Heckklappen sind solche Zuzieheinrichtungen vielfach im Einsatz. Diese Klappen können beispielsweise ohne eine manuelle Betätigung der Klappe selbst zum Beispiel lediglich mit einer Funkfernbedienung betätigt werden.

So betrifft beispielsweise die DE 101 40 365 A1 einen Servoschlosshalter für einen Kraftfahrzeugtürverschluss, wobei der Begriff "Servoschlosshalter" für einen Schlosshalter verwendet wird, bei dem ein automatisches Zuziehen erfolgt. Dabei ist ein Schließbolzen des Kraftfahrzeugtürverschlusses an einem verstellbaren Betätigungsschwinger angebracht. Außerdem ist ein Antrieb für den Betätigungsschwinger vorgesehen. Der Antrieb überführt den Betätigungsschwinger mit dem Schließbolzen sowie eine den Schließbolzen umfassende Drehfalle und folglich eine zugehörige Tür aus einer Vorraststellung motorisch in eine Hauptraststellung. Ein zusätzlicher Sperrhebel sorgt dafür, dass die Betätigungsschwinger bei manueller Überführung der Tür von der Vorraststellung in die Hauptraststellung in dieser Position festgehalten wird.

Solche, mit einer Zuzieheinrichtung versehenen Schlosshalter kommen grundsätzlich bei allen denkbaren Türen an einem Kraftfahrzeug zum Einsatz. So ist nicht nur eine Beaufschlagung von Seitentüren, sondern auch von Kofferraumklappen, Heckklappen oder Motorhauben denkbar und wird im Rahmen der Erfindung mit umfasst. Mit Hilfe der auf diese Weise realisierten Zuzieheinrichtung kann nun die betroffene Tür bzw. Fahrzeugtür aus der bereits angesprochenen Vorraststellung in die Hauptraststellung gegen den Widerstand von beispielsweise einer Dichtung verlagert werden.

Eine weitere konstruktive Auslegung einer Zuzieheinrichtung ist Gegenstand der DE 198 28 040 B4. Hier geht es um eine kraftunterstützte Schließeinrichtung für Türen, Klappen, Verdecke oder Dächer von Kraftfahrzeugen und insbesondere Personenkraftwagen, bei welcher an einer Drehfalle ein schwenkbares Anschlagelement angeordnet ist. Außerdem verfügt die mit der Drehfalle wechselwirkende Sperrklinke ebenfalls über ein schwenkbares Anschlagelement. Die beiden Anschlagelemente wirken mit einer Steuerscheibe beim Öffnungs- oder Schließvorgang zusammen. Die Steuerscheibe ist Bestandteil eines Stellantriebs, mit dessen Hilfe sowohl ein Öffnungs- als auch ein Schließvorgang bewirkt werden kann.

Aus der unveröffentlichten DE 10 2017 101 704.6 ist ein Schloss für ein Kraftfahrzeug bekannt geworden, aufweisend ein Gesperre aus einer Drehfalle und einer Sperrklinke, einer Zuzieheinrichtung und einem elektrischen Antrieb, wobei das Zuziehen zumindest bereichsweise mittels eines Kraftschlusses erfolgt. Die Zuzieheinrichtung wirkt hierbei unmittelbar auf die Drehfalle und überführt die Drehfalle von einer Vorrastposition in eine Hauptrastposition. Ein an der Drehfalle angeordneter Sensor erfasst dabei zumindest eine Position der Drehfalle und vorzugsweise die Hauptrastposition, so dass ein Zuziehen beendet bzw. gestoppt werden kann.

Der Offenbarung ist weiterhin zu entnehmen, dass der Kraftaufwand beim Zuziehen überwacht wird. Die Überwachung des Kraftaufwands erfolgt hierbei mittels einer Erfassung des Stromanstiegs, wobei der Stromanstieg als Maß für einen ordnungsgemäßen Ablauf des Zuziehvorgangs erfassbar und als Steuermittel einsetzbar ist. Eine Fehlfunktion oder ein Einklemmen werden mittels eines überhöhten Stroms detektiert, so dass ein Unterbrechen, Ausklinken des Zuziehantriebs und/oder ein Reversieren des Zuziehantriebs einleitbar ist.

Aus der ebenfalls unveröffentlichten DE 10 2018 106 016.5 ist darüber hinaus eine Kraftfahrzeugantriebsanordnung bekannt, mit einem Antriebsglied und einem Widerlager, ferner mit zumindest einer Feder zwischen dem Antriebsglied und dem Widerlager und mit wenigstens einem Antriebssensor, welcher je nach Kraftbeaufschlagung des Antriebsgliedes gegen die Kraft der Feder und eine damit verbundene Relativbewegung zwischen dem Antriebsglied und dem Widerlager ein Sensorsignal an eine Steuereinheit übermittelt. Mittels des Antriebsglieds-Sensors wird in Abhängigkeit einer Kraftbeaufschlagung des Antriebsgliedes jeweils ein kraftabhängiges Sensorsignal erzeugt, welches von der Steuereinheit zur Ansteuerung eines Stellglieds ausgewertet wird.

Der bekannte Stand der Technik zeigt Lösungsansätze zum Steuern eines Zuziehvorgangs auf, ist aber insgesamt verbesserungswürdig. Insbesondere können starke Schwankungen in Bezug auf individuelle Anforderungen an den Zuziehantrieb auftreten, so dass ein Steuern des Zuziehvorgangs nicht unmittelbar an die individuellen Anforderungen im Kraftfahrzeugschloss anpassbar ist. Hier setzt die Erfindung an.

Aufgabe der Erfindung ist es, ein verbessertes Schloss für ein Kraftfahrzeug mit einer Zuzieheinrichtung bereitzustellen. Insbesondere ist es Aufgabe der Erfindung, ein Schloss für ein Kraftfahrzeug mit einer Zuzieheinrichtung bereitzustellen, das an die individuellen Anforderungen eines Schlosses anpassbar ist, wobei vorzugsweise eine möglichst realistische Möglichkeit zur Erfassung einer Abweichung einer Steuergröße bereitgestellt werden soll. Darüber hinaus ist es Aufgabe der Erfindung, eine konstruktiv günstige und kostensparende Lösung bereitzustellen.

Die Lösung der Aufgabe erfolgt durch die Merkmale des unabhängigen Patentanspruchs 1. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in den Unteransprüchen beschriebenen Merkmale möglich.

Gemäß dem Patentanspruch 1 wird die Aufgabe der Erfindung dadurch gelöst, dass ein Schloss für ein Kraftfahrzeug bereitgestellt wird, aufweisend ein Gesperre aus einer Drehfalle und mindestens einer Sperrklinke, einer Zuzieheinrichtung mit einem elektrischen Antrieb, wobei das Gesperre mittels der Zuzieheinrichtung von einer Öffnungsposition, insbesondere einer Vorrastposition, in zumindest eine Hauptrastposition überführbar ist und eine Steuereinheit für den Zuziehantrieb, wobei in Abhängigkeit einer Messgröße des Zuziehantriebs ein Zuziehvorgang unterbindbar ist und wobei der Zuziehvorgang in Abhängigkeit einer bestimmbaren Abweichung von einer Sollwertkurve unterbindbar ist. Durch die erfindungsgemäße Ausbildung des Kraftfahrzeugschlosses ist nun die Möglichkeit geschaffen, eine an die realen Belastungen im Kraftfahrzeug angepasste Steuerung des Zuziehvorgangs bereitzustellen. Insbesondere eine auf das Kraftfahrzeug abgestimmte Sollwertkurve, die beispielsweise mittels eines Kalibrieren des Schlosses in Bezug auf die real im Kraftfahrzeug vorliegenden Belastungen kann eine Sollwertkurve in der Steuereinheit abgelegt werden, so dass ein Referenzwert zur Berechnung bzw. Bestimmung einer Abweichung von der Sollwertkurve bereitgestellt werden kann.

Der Zuziehvorgang kann dann in Abhängigkeit der festlegbaren bzw. vorgebbaren Abweichung von der Sollwertkurve gesteuert werden. Weicht die Messgröße über die bestimmbare Abweichung der Sollwertkurve hinaus von der Sollwertkurve ab, so kann der Zuziehvorgang unterbrochen werden. Eine Abweichung kann beispielsweise dann auftreten, wenn eine zum Beispiel Kraftfahrzeugseitentür zugezogen wird und ein Gegenstand zwischen die Tür und den Rahmen des Kraftfahrzeugs gelangt. In diesem Fall kann der Zuziehvorgang unterbrochen bzw. ein Reversieren des Zuziehvorgangs eingeleitet werden. Durch das erfindungsgemäße Unterbinden des Zuziehvorgangs und insbesondere durch die Festlegung einer Abweichung von der Sollwertkurve kann eine Steuerung des Zuziehvorgangs mit einem Höchstmaß an Betriebssicherheit bereitgestellt werden.

Als Schloss für ein Kraftfahrzeug können verschiedene Schlösser und Betätigungselemente zum Einsatz kommen. Das Schloss kann als kompakte Baueinheit zum Beispiel in einer Seitentür, Schiebetür oder im Bereich von Klappen oder Deckeln oder Abdeckungen zum Einsatz kommen. Eben überall dort, wo schwenkbeweglich oder verschieblich angeordnete Bauteile am Kraftfahrzeug zum Betrieb des Kraftfahrzeugs gesichert werden müssen. Darüber hinaus ist es auch vorstellbar, dass zum Beispiel Haubenschlösser, Hilfsschlösser wie beispielsweise in Transportern, in Kombination mit einer Zuzieheinrichtung verwendet werden.

Ein Gesperre in einem erfindungsgemäßen Kraftfahrzeugschloss weist eine Drehfalle und mindestens eine Sperrklinke auf, wobei die Drehfalle mittels der Sperrklinke in einer Rastposition sperrbar ist. Dabei kommen zweistufige Sperrmechanismen aus einer Vorrast und einer Hauptrast wie auch Systeme mit einer oder zwei Sperrklinken zum Einsatz. Auf das Gesperre wirkt ein Auslösehebel, wobei der Auslösehebel zum Beispiel durch eine Schwenkbewegung, die eine oder mehrere Sperrklinken außer Eingriff mit der Drehfalle bringt. Vorzugsweise ist der Auslösehebel schwenkbeweglich im Kraftfahrzeugschloss und bevorzugt in einem Gehäuse und/oder einem Schlosskasten des Kraftfahrzeugschlosses gemeinsam mit dem Gesperre gelagert.

Die Zuzieheinrichtung weist einen elektromotorischen Antrieb auf und kann unmittelbar im Schloss angeordnet sein oder als separates Modul zum Beispiel mittels eines Bowdenzugs oder eines Hebelsystems mittelbar oder unmittelbar mit der Drehfalle zusammenwirken. Dies meint, dass zum Beispiel ein elektromotorischer Antrieb mit einem entsprechenden Getriebe als separates Modul ausgebildet ist und das separate Modul zum Beispiel mittels eines Bowdenzugs mit einem Schlossgehäuse des Schlosses verbunden ist. Die Bowdenzugseele kann dann zum Beispiel mit einer Zuziehklinke verbunden sein, wobei die Zuziehklinke unmittelbar auf die Drehfalle wirkt. Die Zuziehklinke ist dann schwenkbeweglich im Schloss angeordnet, und zwar derart, dass die Zuziehklinke über den Zuziehweg mit der Drehfalle in Eingriff bringbar ist.

Es ist aber auch vorstellbar, dass die Zuzieheinrichtung unmittelbar am Schloss oder sogar in das Schloss integriert ist, dabei ist es zum Beispiel vorstellbar, dass der elektrische Antrieb und beispielsweise ein Drehmomentenwandler, zum Beispiel in Form eines Getriebes, unmittelbar mit der Drehfalle verbunden ist. Dazu kann beispielsweise ein elektrischer Motor mit einem Spindeltrieb zusammenwirken, wobei der Spindeltrieb die Zuziehklinke bewegt. Die Zuziehklinke kann in diesem Fall schwenkbeweglich im Schloss derart angeordnet sein, dass die Zuziehklinke über den Zuziehweg mit der Drehfalle in Eingriff bringbar ist. Die Zuzieheinrichtung überführt, mit Hilfe des elektrischen Antriebs, das Gesperre von einer Öffnungsposition in eine Hauptrastposition. Vorzugsweise wird das Gesperre von einer Vorrastposition in eine Überhubposition überführt, so dass ein sicheres Einfallen der Sperrklinke in die Hauptrastposition der Drehfalle ermöglichbar ist.

Eine Steuereinheit ist mit dem elektrischen Antrieb der Zuzieheinrichtung verbunden und steht gleichzeitig mit zumindest einem Sensor, beispielsweise einem Mikroschalter oder Hallsensor, in Verbindung. Mittels des Sensors ist eine Drehbewegung der Drehfalle, eine Position des Gesperres und/oder eine Stellung der Zuzieheinrichtung erfassbar. In Abhängigkeit zumindest einer Messgröße des Zuziehantriebs kann die Steuereinheit Einfluss auf den Zuziehvorgang nehmen. Insbesondere bei einem Erreichen der Hauptrastposition bzw. einer Überhubposition steuert die Steuereinheit den elektrischen Antrieb derart, dass ein weiteres Zuziehen unterbunden bzw. ein Reversieren des Antriebs eingeleitet wird. Eine Messgröße kann ein Sensorsignal sein, als Messgröße kann aber auch eine Stromaufnahme des elektrischen Antriebs, eine Drehzahl des elektrischen Antriebs und/oder ein Spannungsverlauf zum Beispiel eines Hallsensors eines der Zuzieheinrichtungen dienen. In Abhängigkeit der Messgröße und insbesondere durch eine in der Steuerung bestimmbare Abweichung von der Sollwertkurve kann die Messgröße dann zum Steuern des Zuziehvorgangs herangezogen werden. Insbesondere kann bei einer Messgrößendifferenz ein Unterbinden des Zuziehvorgangs bzw. ein Abbrechen des Zuziehvorgangs mittels der Steuereinheit eingeleitet werden. Die Messgrößendifferenz ist somit ein Maß zur Steuerung des Zuziehvorgangs.

In einer Ausgestaltungsvariante der Erfindung ist eine Sollwertkurve für eine Drehzahl und/oder eine Stromaufnahme des elektrischen Antriebs in der Steuereinheit enthalten, insbesondere gespeichert. Eine Sollwertkurve kann beispielsweise mittels eines Kalibrierens des Kraftfahrzeugschlosses in Bezug auf die realen Anforderungen im Einsatz des Schlosses im Kraftfahrzeug bestimmbar sein. Diese Sollwertkurve kann für eine Drehzahl des Elektromotors des elektrischen Antriebs und/oder für eine Stromaufnahme des Motors des elektrischen Antriebs in der Steuereinheit abgelegt werden. Diese Sollwertkurve bildet dann das Maß bzw. die Basis für die Bestimmung der Abweichung. Die Stromaufnahme des Motors ist dabei unmittelbar durch die Steuereinheit erfassbar, da die Steuereinheit den Strom für den Betrieb des elektrischen Antriebs bereitstellt. Die Drehzahl des Motors kann beispielsweise mittels eines Drehgebers erfasst werden, so dass ein unmittelbares Bestimmen der Abweichung in der Steuereinheit zur Verfügung steht. Der Drehgeber kann beispielsweise unmittelbar am Motor angeordnet sein und mit der Steuereinheit in Verbindung stehen. Die Sollwertkurve ist dabei nicht unmittelbar als Linie zu verstehen, sondern kann einen Streubereich bzw. zum Beispiel eine Stromschwankung während des Zuziehens aufweisen. Wesentlich hierfür ist aber, dass die Abweichung signifikant von der Sollwertkurve abweicht, wobei die Messgrößendifferenz an eine Schaltschwelle anpassbar ist, wobei bei einem Erreichen einer Schaltschwelle eine Unterbrechung des Zuziehvorgangs einleitet. Insbesondere bei einem Einklemmen eines Gegenstands in beispielsweise eine Klappenöffnung kann es zu einer Verringerung der Drehzahl kommen, so dass eine Schaltschwelle für eine Drehzahl erreicht wird, die wiederum als Maß bzw. Messgröße zur Unterbrechung des Zuziehvorgangs dient.

In einer weiteren Ausgestaltungsvariante der Erfindung ergibt sich dann ein Vorteil, wenn die Zuzieheinrichtung ein Antriebsglied, insbesondere einen Bowdenzug, und ein Widerlager aufweist, mit zumindest einer Feder zwischen dem Antriebsglied und dem Widerlager und einem Antriebsgliedsensor, wobei mittels des Antriebsgliedsensors eine Kraftbeaufschlagung des Antriebsglieds, insbesondere eine Spannung, erfassbar ist. An diesem Ausführungsbeispiel wird deutlich, dass nicht alleine die unmittelbar am elektrischen Antrieb erfassbaren Messgrößen zur Steuerung des Zuziehvorgangs herangezogen werden können. Vielmehr ist es auch vorstellbar, dass eine Spannungserfassung in einem der Zuzieheinrichtung zugeordneten Antriebsglied zur Erfassung einer Abweichung einer Messgröße herangezogen werden kann. Ein Antriebsglied kann dabei derart wirke, wie dies in der DE 10 2018 106 046.5 offenbart ist, wobei der Offenbarungsgehalt dieser Druckschrift hiermit zum Offenbarungsgehalt der vorliegenden Erfindung erklärt wird. Auch für den Spannungsverlauf am Antriebsglied kann eine Sollwertkurve bestimmt und gespeichert werden, so dass bei einer Abweichung von der Sollwertkurve ein Zuziehvorgang reversiert werden kann. Die Erfindung stützt sich somit darauf, dass in Abhängigkeit von einer Sollwertkurve bzw. einer erfassten Messgröße für einen idealen Zuziehvorgang, eine Sollwertkurve bestimmbar ist und als Referenzkurve in der Steuereinheit ablegbar ist.

Erfindungsgemäß ist der Zuziehvorgang in Abhängigkeit einer Stromdifferenz und/oder einer Drehzahldifferenz und/oder einer Spannungsdifferenz als Abweichung von der Sollwertkurve unterbindbar.

In Abhängigkeit von der Sollwertkurve und beispielsweise einer Sollwertkurve des Stromverlaufs während des Zuziehvorgangs kann eine Schaltschwelle bestimmbar sein, bei deren Erreichen die Abweichung von der Sollwertkurve so groß ist, dass von einem irregulären Zuziehvorgang auszugehen ist. Dies kann insbesondere durch ein Einklemmen oder eine Beschädigung zum Beispiel an einer zuzuziehenden Tür oder Klappe hervorgerufen werden. Durch die erfindungsgemäße Auswertung der Abweichung zum Beispiel der Strom- oder Drehzahldifferenz wird somit ein Höchstmaß an Betriebssicherheit erreicht, so dass auch bei einem vollautomatischen Schließen der Kraftfahrzeugtür ein Einklemmen verhinderbar ist.

Erfindungsgemäß ist ein Drehfallensensor vorgesehen, wobei mittels des Drehfallensensors eine Zuziehposition der Drehfalle bestimmbar ist. Ein Drehfallensensor wird zusätzlich dazu genutzt, eine genaue Position der Drehfalle zu detektieren. Insbesondere für ein Einklemmen kann dies vorteilhaft sein, da erst bei einem sehr geringen Spalt der durch den Zuziehantrieb zugezogenen zum Beispiel Tür ein Einklemmen bzw. eine Verletzungsgefahr für einen Bediener ausschließbar ist. Erfindungsgemäß ist in Abhängigkeit des Signals des Drehfallensensors ein Einklemmschutz aktivierbar oder deaktivierbar. Insbesondere dann, wenn beispielsweise die Öffnungsposition des Gesperres vor der Vorrast liegt, das heißt die Drehfalle bereits vor dem Erreichen der Vorrastposition mittels des Zuziehantriebs bewegt wird, ist das Aktivieren bzw. Deaktivieren des Einklemmschutzes in Abhängigkeit des Drehfallensensors vorteilhaft. Insbesondere während des Erreichens der Endstellung der zuzuziehenden Bauteile des Kraftfahrzeugs kann es zu sehr hohen Dichtungskräften kommen, die auch in Abhängigkeit der Witterungsverhältnisse von den realen oder idealen Werten des Zuziehvorgangs abweichen können. So kann beispielsweise bei sehr niedrigen Temperaturen die Dichtung einen höheren Widerstand leisten, so dass höhere Dichtungskräfte zu überwinden sind. Somit ist mittels des Drehfallensensors ein Zeitpunkt bzw. eine Position der Drehfalle bestimmbar, nach der ein Einklemmschutz deaktivierbar ist, wobei eine Gefahr eines Einklemmens und/oder eines Verletzen eines Bedieners ab diesem Zeitpunkt mit großer Wahrscheinlichkeit auszuschließen ist. Insbesondere kann das Signal des Drehfallensensors zu einem Zeitpunkt erzeugbar sein, wenn der Zuziehvorgang nahezu beendet ist. Beispielsweise kann auch ein Türspalt von kleiner 3 Millimeter als Maß für eine Deaktivierung des Einklemmschutzes dienen.

In einer weiteren Ausgestaltungsvariante der Erfindung erfolgt im Falle einer Detektion einer Strom- und Drehzahl- und/oder Spannungsdifferenz als Abweichung von der Sollwertkurve ein Abschalten der Strom- und/oder Spannungsversorgung der Zuzieheinrichtung oder ein Reversieren der Zuzieheinrichtung. Je nach Aufbau der Zuzieheinrichtung, die beispielsweise ein selbsthemmendes Getriebe aufweisen kann, kann ein Reversieren der Zuzieheinrichtung vorteilhaft sein, um die Tür oder Klappe bei einem Einklemmen wieder öffnen zu können. Ein Abschalten der Spannungs- und/oder Stromversorgung kann dann vorteilhaft sein, wenn die Zuzieheinrichtung nach dem Wegfall zum Beispiel der Stromversorgung selbständig außer Eingriff mit der Drehfalle gelangt.

In vorteilhafter Weise kann zumindest ein Schaltmittel zur Bestimmung einer Öffnungsposition und/oder einer Vorrastposition und/oder einer Hauptrastposition und/oder einer Überhubposition vorgesehen sein. Durch die Anordnung eines oder mehrerer Schaltmittel kann eine zusätzliche Sicherheit während des Zuziehvorgangs bereitstellbar sein. Insbesondere sind die Positionen des Gesperres genau exakt bestimmbar, so dass eine sehr genaue Erfassung einer Sollwertkurve und somit ein präzises Steuern der Zuzieheinrichtung ermöglichbar ist. Eine Öffnungsposition kann beispielsweise wie in der DE 10 2017 101 704.6 beschrieben, bereits weit vor einer Rastposition vorliegen, nämlich dann, wenn beispielsweise der Zuziehvorgang lediglich kraftschlüssig eingeleitet und erst nach dem Erreichen einer Vorrastposition in einen Formschluss übergeht. Durch die Kombination kann in vorteilhafter Weise mittels des Schaltmittels die Sollwertkurve präzise an den Zuziehvorgang abgestimmt werden.

In vorteilhafter Weise kann das Schaltmittel ein Mikroschalter oder ein Hallsensor oder ein Drehwinkelgeber sein. Je nach Einsatzgebiet des Schaltmittels am Gesperre oder an der Zuzieheinrichtung können unterschiedliche Sensoren vorteilhaft sein, wobei beispielsweise ein Schaltmittel an einem Gesperreteil, wie beispielsweise einer Sperrklinke, ein sicheres Erfassen der Sperrklinkenposition bereitstellt. Ein Drehwinkelgeber kann beispielsweise zur Erfassung der Schwenkbewegung der Drehfalle aber auch zur Bestimmung einer in der Zuzieheinrichtung auftretenden Kraft einsetzbar sein.

In einer weiteren Ausgestaltungsvariante der Erfindung ergibt sich dann ein Vorteil, wenn in Abhängigkeit von der Sollwertkurve eine Schaltschwelle bestimmbar ist. Eine Schaltschwelle ist dabei so weit von der Sollwertkurve bzw. dem Sollwertbereich der Messgröße entfernt, dass ein eindeutiges Signal zur Unterbrechung des Zuziehvorgangs bereitstellbar ist. Eine Schaltschwelle kann beispielsweise durch ein Unterschreiten einer Motordrehzahl des elektrischen Antriebs erreicht werden, so dass ein Mittel zur Erfassung eines Einklemmens bereitstellbar ist und für den Bediener des Kraftfahrzeugs ein Einklemmschutz zur Verfügung steht. Die Betriebssicherheit kann somit verbessert und die Komponenten des Kraftfahrzeugschlosses bzw. der Zuzieheinrichtung vor Beschädigungen geschützt werden.

Nachfolgend wird die Erfindung unter Bezugnahme auf die anliegenden Zeichnungen und Diagramme anhand eines Ausführungsbeispiels näher erläutert. Es gilt jedoch der Grundsatz, dass das Ausführungsbeispiel die Erfindung nicht beschränkt, sondern lediglich eine Ausgestaltungsform darstellt.

Es zeigt:

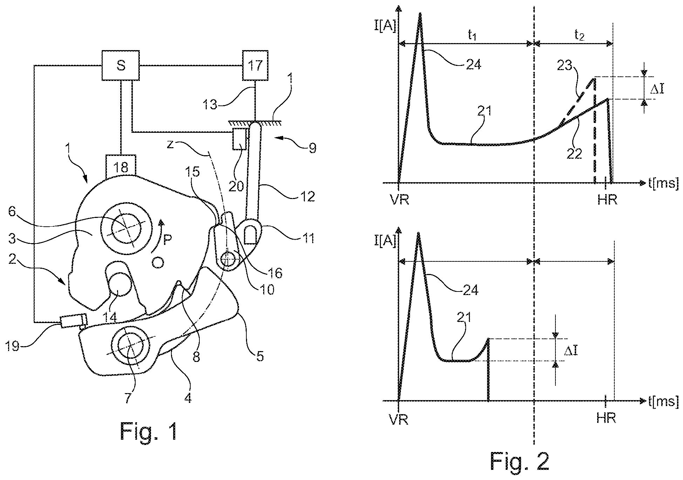

- Figur 1: eine prinzipielle Darstellung eines Teils eines Schlosses für ein Kraftfahrzeug mit
- Fig. 2: einer Zuzieheinrichtung und einem Gesperre in Eingriff mit einem Schlosshalter, wobei eine Vorrastposition des Gesperres wiedergegeben ist, ein Strom-Zeit-Diagramm mit einem schematisch dargestellten Stromverlauf während eines Zuziehvorgangs, wobei das obere Diagramm zusätzlich eine Stromdifferenz während des nahezu vollendeten Zuziehvorgangs zeigt das untere Strom-Zeit-Diagramm einen Stromverlauf darstellt, der bei einem aktiven Einklemmschutz den Stromverlauf bei Erkennung eines Einklemmens wiedergibt,

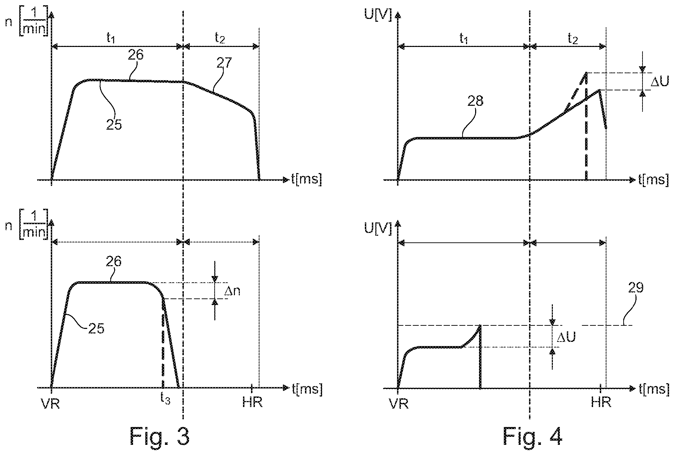

- Fig. 3: ein Drehzahl-Zeit-Diagramm mit einer Darstellung eines Drehzahlverlaufes während eines üblichen Zuziehvorgangs im oberen Diagramm und im unteren Diagramm die Darstellung eines unterbrochenen Zuziehvorgangs nach einer Detektion eines Einklemmens, wobei die ermittelbare Drehzahldifferenz zum Abschalten des elektrischen Antriebs ebenfalls in das untere Diagramm eingezeichnet wurde, und
- Fig. 4: einen Spannungs-Zeit-Verlauf als Diagramm bei einem üblichen Zuziehvorgang, wobei der Spannungsverlauf eines Feder-Hall-Sensors in Form einer Auswertung des Spannungsverlaufs wiedergegeben ist. Zusätzlich ist im oberen Diagramm ein Spannungsverlauf bzw. eine Differenzspannung angezeigt, die ein Einklemmen detektiert und ein Reversieren des Motors bzw. ein Abschalten des Motors bewirkt und im unteren Diagramm einen Spannungsverlauf eines Feder-Hall-Sensors bei der Erkennung eines Einklemmens bei einem aktivierten Einklemmschutz, wobei ebenfalls die Spannungsdifferenz graphisch eingezeichnet wurde.

In der Figur 1 ist ein Teil eines Kraftfahrzeugschlosses 1 wiedergegeben. Gezeigt ist ein Gesperre 2 aus einer Drehfalle 3, einer Vorrastsperrklinke 4 und einer Hauptrastsperrklinke 5. Die Drehfalle ist um eine Achse 6 und die Sperrklinken 4, 5 um eine Achse 7 herum schwenkbeweglich gelagert. Zum Erreichen einer Schließstellung ist die Drehfalle um die Achse 6 in Richtung des Pfeils P schwenkbeweglich zum Beispiel in einer Schlossplatte des Kraftfahrzeugschlosses 1 lagerbar. Dargestellt ist in der Figur 1 die Vorrastposition, wobei die Vorrastsperrklinke mit einer Rastkontur 8 an der Drehfalle in Eingriff bringbar ist.

Dargestellt ist weiterhin als Teil der Zuzieheinrichtung 9 eine Zuziehklinke 10, eine Aufnahme 11, ein Zugmittel 12 sowie eine Bowdenzugseele 13, wobei das Zugmittel 12 und die Bowdenzugseele 13 Teil eines Bowdenzugs 12, 13 sein können. Die Zuziehklinke 10 ist schwenkbeweglich über einen Zuziehweg Z im Kraftfahrzeugschloss aufgenommen. Der Zuziehweg Z ist als strichpunktierte Linie und als Kreisbogen in die Figur 1 eingezeichnet. Dargestellt ist ebenfalls der Schlosshalter 14, wobei der Schlosshalter 14 in der Vorraststellung bereits mit der Drehfalle in Eingriff steht.

Die Zuziehklinke 10 wie auch die Drehfalle 3 weisen jeweils eine Kontur 15, 16 auf, die ein Bewegen der Drehfalle 3 in Richtung des Pfeils P und entlang des Zuziehwegs Z ermöglichen. Zum Verschwenken der Drehfalle 3 in Richtung des Pfeils P wird die Bowdenzugseele 13 mittels des elektrischen Antriebs 17 betätigt, so dass die Drehfalle 3 von einer Vorrastposition in eine Hauptrastposition überführbar ist. Die Figur 1 zeigt die Vorrastposition, wobei die Vorrastsperrklinke 4 mit der Rastkontur 8 in Eingriff steht. Durch ein Betätigen des elektrischen Antriebs 17 gelangt die Hauptrastsperrklinke 5 mit der Rastkontur 8 in Eingriff.

Bevorzugt bezieht sich die Erfindung auf den Zuziehvorgang des Gesperres von der Vorrastposition in die Hauptrastposition. Vorstellbar ist es aber auch, dass der Zuziehantrieb 9 bereits vor der Vorrast mit der Drehfalle 3 in Eingriff gelangt und es ist ebenfalls vorstellbar, dass sich Zuziehvorgang bis zu einer Überhubposition, das heißt einer Position über die Hauptrast hinaus, erstreckt. Die im Nachfolgenden beschriebenen Diagramme veranschaulichen beispielhaft den Zuziehvorgang von einer Vorrastposition VR bis zu einer Hauptrastposition HR.

Ein Schaltmittel 18 ist beispielhaft an der Drehfalle 3 angeordnet und kann beispielsweise ein Mikroschalter sein, der mit einer Kontur an der Drehfalle 3 zusammenwirkt, so dass beispielhaft eine Öffnungs-, Rast- oder Überhubposition detektierbar ist. Selbstverständlich können auch mehrere Schaltmittel zur Erkennung der Öffnungs- , Rast- und/oder Überhubposition am Gesperre angeordnet sein. Dazu kann auch beispielsweise ein weiteres Schaltmittel 19 an der Hauptrastsperrklinke 5 und/oder ein weiteres Schaltmittel 20 am Bowdenzug 12, 13 bzw. Zugmittel 12 angeordnet sein.

In der Figur 2 ist prinzipiell ein Stromkurvenverlauf eines Zuziehvorgangs von einer Vorrastposition VR in eine Hauptrastposition HR wiedergegeben. Das Diagramm zeigt den Verlauf der Stromaufnahme des elektrischen Antriebs 17 über die Zeit. Dargestellt ist ein idealer Stromkurvenverlauf. Die realen Werte schwanken um diese ideale Kurve herum, wobei aber ein Toleranzfenster um den idealen Verlauf herum bestimmbar ist. Ausgehend von einer starken Stromaufnahme zu Beginn des Anlaufs des elektrischen Antriebs 17 folgt in dem Strom-Zeit-Diagramm ein nahezu linearer Bereich 21 mit einer konstanten Stromaufnahme des elektrischen Antriebs 17. Die Stromaufnahme weist daran anschließend einen steigenden Bereich 22 auf, wobei der steigende Bereich 22 dadurch bedingt ist, dass der elektrische Antrieb 17 die Drehfalle 3 gegen den Druck der Türdichtung schließen muss. Mit dem Erreichen der Hauptrastposition HR kann beispielsweise mittels des Schaltmittels 18, 19, 20 das Erreichen der Hauptrastposition HR detektiert werden, so dass mittels der Steuerung S ein Abschalten des elektrischen Antriebs 17 erfolgen kann. Die Stromaufnahme fällt somit im Diagramm stark ab. Das obere Diagramm in der Figur 2 zeigt somit den idealen Verlauf einer Stromkurve über einen Zuziehvorgang. Kommt es nun aufgrund zum Beispiel eines Einklemmens eines Gegenstands zwischen einer zum Beispiel Tür und einer Türdichtung dazu, dass der elektrische Antrieb 17 die Drehfalle 3 gegen den eingeklemmten Gegenstand bewegt, so steigt die Stromaufnahme des elektrischen Antriebs 17 stark an, wie dies mit dem gestrichelten Bereich 23 im oberen Diagramm der Figur 2 wiedergegeben ist. Diese überhöhte Stromaufnahme kann mittels der Steuerung S detektiert werden, wobei die Steuerung S ausgehend von einer gespeicherten Sollwertkurve 24 in der Steuerung detektiert die Steuerung S eine Stromdifferenz ΔI, wodurch eine Messgröße zum Abschalten des elektrischen Antriebs 17 zur Verfügung steht. Überschreitet die Stromaufnahme des elektrischen Antriebs die Sollwertkurve 24 bzw. den üblichen Schwankungsbereich der Stromaufnahme des elektrischen Antriebs 17 um ein bestimmbares Maß ΔI einer Stromdifferenz ΔI, so kann diese Stromdifferenz ΔI als Maß für ein Einklemmen genommen werden und die Steuerung S kann den Zuziehvorgang unterbinden bzw. unterbrechen. Der Strom kann abgeschaltet werden, wie dies mit der gestrichelten Linie im oberen Diagramm der Figur 2 dargestellt ist. Vorstellbar ist aber auch, dass ein Reversieren des elektrischen Antriebs 17 eingeleitet wird, so dass die Zuzieheinrichtung 9 die Drehfalle 3 wieder freigibt.

Zusätzlich ist in die Figur 3 ein Zeitpunkt t₁ als gestrichelte Linie eingetragen. Der Zeitpunkt t₁ ist eine bestimmbare Zeit, in der ein Einklemmschutz eingeschaltet ist, wohingegen während eines Zeitraums t₂ der Einklemmschutz ausschaltbar ist. Dies kann insbesondere dann vorteilhaft sein, wenn zum Beispiel große Kräfte zum Zuziehen des Gesperres 1 notwendig sind, so dass große Stromdifferenzen im Zeitraum t₂ auftreten. Insbesondere kann zum Beispiel eine zugezogene Tür sich während des Zeitraums t₂ auch in einer bereits so weit geschlossenen Position befinden, dass ein Einklemmen für einen Bediener nicht mehr möglich ist. Dies sind beispielsweise Türspalte von kleiner 3 Millimetern.

In dem unteren Diagramm der Figur 2 ist wiederum eine idealisierte Stromkurve wiedergegeben. Der Stromkurvenverlauf entspricht dem Stromkurvenverlauf, der auftritt, wenn während des Zuziehens ein Einklemmen detektiert wird. Insbesondere im linearen Bereich 21 des Zuziehvorgangs kommt es zu einer starken Stromdifferenz ΔI, die von der Steuerung S als Abweichung von der Sollwertkurve 24 erkannt wird, so dass ein Abschalten des elektrischen Antriebs 17 erfolgen kann. Die vorgenannte Überwachung der Stromaufnahme des elektrischen Antriebs 17 bildet somit ein sicheres Mittel zur Detektion eines Einklemmens, wodurch ein Höchstmaß an Sicherheit während des Zuziehvorgangs bereitstellbar ist.

In der Figur 3 ist die Motordrehzahl n über die Zeit t wiedergegeben. Dargestellt ist wiederum eine idealisierte Sollwertkurve 25. Auch hier kann es natürlich einen Streubereich bzw. Schwankungen um die Sollwertkurve 25 herum geben, die in einem Toleranzbereich von der Steuerung Sals tolerierbar erkannt werden. Die Drehzahl n steigt zu Beginn des Zuziehvorgangs an, woran sich wiederum ein linearer Bereich 26 anschließt. Anschließend fällt die Drehzahl in einem fallenden Bereich 27 ab, was durch den Widerstand einer Tür- oder Klappendichtung bedingt ist. Auch in diesem idealen Verlauf der Drehzahl n des elektrischen Antriebs 17 ist wieder ein Zeitraum t₁ eingetragen, zu dem ein Einklemmschutz vorliegen kann. Das heißt, der Einklemmschutz ist während des Zeitraums t₁ eingeschaltet, wohingegen im Zeitraum t₂ kein Einklemmschutz mehr vorliegen kann.

Im unteren Diagramm der Figur 3 ist der Einklemmfall wiedergegeben. Nach einem Ansteigen der Drehzahl folgt der lineare Bereich 26 der Drehzahlkurve 25, wobei ein Abfallen der Drehzahl um eine Drehzahldifferenz Δn eingetragen ist, die von der Steuerung wieder als Überschreitung eines Toleranzmaßes detektierbar ist, so dass zu einem Zeitpunkt t3 der Zuziehvorgang unterbrochen wird.

In der Figur 4 ist der Verlauf einer Spannung über die Zeit und wiederum über den Zeitraum von einer Vorrastposition bis hin zu einer Hauptrastposition wiedergegeben. Ein derartiges Spannungssignal kann beispielsweise durch einen Hallsensor 20 an einem Zugmittel 12 detektierbar sein. Zur Erzielung eines Spannungssignals wird hiermit beispielhaft auf die DE 10 2017 101 704.6 hingewiesen, die hiermit vollumfänglich zum Offenbarungsgehalt der Anmeldung erklärt wird. Auch hier gibt es wiederum eine Sollwertkurve 28 als idealen Spannungsverlauf, wobei der ideale Spannungsverlauf in der Steuerung hinterlegt ist. Die Hinterlegung der Sollwertkurven 24, 25, 28 kann beispielsweise bei einem Kalibrieren der Sensoren bzw. der Antriebe 17 ermittelt werden.

Kommt es während des Zuziehvorgangs von der Vorrastposition VR hin zu Hauptrastposition HR, so kann hier wiederum eine Spannungsdifferenz ΔU erfasst werden, die wiederum ein Maß für ein Einklemmen während des Zuziehvorgangs darstellt. Kommt es zu einer zu großen Spannungsdifferenz ΔU, so kann die Steuerung S den Zuziehvorgang abbrechen und zum Beispiel ein Reversieren des elektrischen Antriebs 17 einleiten. Die Schaltschwelle 29, zu der ein Abschalten des Zuziehvorgangs einleitbar ist, kann in Abhängigkeit der mittels eines kalibrieren, das heißt eines Einmessens der Steuerkurve 24, 25, 28 und/oder des elektrischen Antriebs 17 bestimmbar sein und als Vergleichsgröße in der Steuerung S gespeichert vorliegen.

### Bezugszeichenliste

- 1: Kraftfahrzeugschloss
- 2: Gesperre
- 3: Drehfalle
- 4: Vorrastsperrklinke
- 5: Hauptrastsperrklinke
- 6, 7: Achse
- 8: Rastkontur
- 9: Zuzieheinrichtung
- 10: Zuziehklinke
- 11: Aufnahme
- 12: Zugmittel
- 13: Bowdenzugseele
- 14: Schlosshalter
- 15: Drehfallenkontur
- 16: Zuziehklinkenkontur
- 17: elektrischer Antrieb
- 18, 19, 20: Schaltmittel
- 21, 26: linearer Bereich
- 22: steigender Bereich
- 23: gestrichelter Bereich
- 24, 25, 28: Sollwertkurve
- 27: fallender Bereich
- 29: Schaltschwelle

- P: Pfeil
- VR: Vorrastposition
- HR: Hauptrastposition
- ΔI: Stromdifferenz
- Δn: Drehzahldifferenz
- ΔU: Spannungsdifferenz
- S: Steuerung
- t, t₁, t₂, t₃: Zeit, Zeitpunkt
- n: Drehzahl

## Patentansprüche

1. Schloss (1) für ein Kraftfahrzeug aufweisend ein Gesperre (2) aus einer Drehfalle (3) und mindestens einer Sperrklinke (4), einer Zuzieheinrichtung (9) mit einem elektrischen Antrieb (17), wobei das Gesperre (2) mittels der Zuzieheinrichtung (9) von einer Öffnungsposition, insbesondere einer Vorrastposition (VR), in zumindest eine Hauptrastposition (HR) überführbar ist und einer Steuereinheit (S) für den Zuziehantrieb (9), wobei in Abhängigkeit einer Messgröße (I, U, n) des Zuziehantriebs (9) ein Zuziehvorgang unterbindbar ist, wobei der Zuziehvorgang in Abhängigkeit einer bestimmbaren Abweichung (ΔI, ΔU, Δn) von einer Sollwertkurve (24, 25, 28) unterbindbar ist, wobei der Zuziehvorgang in Abhängigkeit einer Stromdifferenz (ΔI) und/oder einer Drehzahldifferenz (Δn) und/oder einer Spannungsdifferenz (ΔU) als Abweichung von der Sollwertkurve (24, 25, 28) unterbindbar ist, **dadurch gekennzeichnet, dass** ein Drehfallensensor (18) vorgesehen ist, wobei mittels des Drehfallensensors (18) eine Zuziehposition (VR, HR) der Drehfalle (3) bestimmbar ist, wobei in Abhängigkeit des Signals des Drehfallensensors (18) ein Einklemmschutz aktivierbar oder deaktivierbar ist.

2. Schloss (1) nach Anspruch 1, **dadurch gekennzeichnet, dass** eine Sollwertkurve (24, 25, 28) für eine Drehzahl (n) und/oder eine Stromaufnahme (I) des elektrischen Antriebs (17) in der Steuereinheit (S) enthalten, insbesondere gespeichert ist.

3. Schloss (1) nach Anspruch 1, **dadurch gekennzeichnet, dass** die Zuzieheinrichtung (9) ein Antriebsglied (12, 13), insbesondere einen Bowdenzug, und ein Widerlager aufweist, mit zumindest einer Feder zwischen dem Antriebsglied und dem Widerlager und einem Antriebsgliedsensor (20), wobei mittels des Antriebsgliedsensors (20) eine Kraftbeaufschlagung des Antriebsglieds, insbesondere eine Spannung (U), erfassbar ist.

4. Schloss (1) nach einem der Ansprüche 1 bis 3, **dadurch gekennzeichnet, dass** im Falle einer Detektion einer Strom- und/oder Drehzahl- und/oder Spannungsdifferenz (ΔI, ΔU, Δn) als Abweichung von der Sollwertkurve (24, 25, 28) ein Abschalten der Stromversorgung der Zuzieheinrichtung (9) oder ein Reversieren der Zuzieheinrichtung (9) erfolgt.

5. Schloss (1) nach einem der Ansprüche 1 bis 4, **dadurch gekennzeichnet, dass** zumindest ein Schaltmittel (18, 19, 20) zur Bestimmung einer Offnungsposition und/oder einer Vorrastposition (VR) und/oder einer Hauptrastposition (HR) und/oder einer Überhubposition vorgesehen ist.

6. Schloss (1) nach einem der Ansprüche 1 bis 5, **dadurch gekennzeichnet, dass** das Schaltmittel (18, 19, 20) ein Mikroschalter oder ein Hallsensor ist.

7. Schloss (1) nach einem der Ansprüche 1 bis 6, **dadurch gekennzeichnet, dass** in Abhängigkeit von der Sollwertkurve (24, 25, 28) eine Schaltschwelle (29) bestimmbar ist.

## Claims

1. Latch (1) for a motor vehicle, comprising a locking mechanism (2) consisting of a catch (3) and at least one pawl (4), a closing device (9) having an electric drive (17), it being possible for the locking mechanism (2) to be transferred from an open position, in particular a pre-ratchet position (VR), into at least one main ratchet position (HR) by means of the closing device (9), and a control unit (S) for the closing drive (9), it being possible to prevent a closing operation on the basis of a measurement variable (I, U, n) of the closing drive (9), it being possible to prevent the closing operation on the basis of a determinable deviation (ΔI, ΔU, Δn) from a setpoint value curve (24, 25, 28), it being possible to prevent the closing operation on the basis of a current difference (ΔI) and/or a speed difference (Δn) and/or a voltage difference (ΔU) as a deviation from the setpoint value curve (24, 25, 28), **characterized in that** a catch sensor (18) is provided, it being possible to determine a closed position (VR, HR) of the catch (3) by means of the catch sensor (18), it being possible to activate or deactivate anti-jamming protection on the basis of the signal from the catch sensor (18).

2. Latch (1) according to claim 1, **characterized in that** a setpoint value curve (24, 25, 28) for a speed (n) and/or a current consumption (I) of the electric drive (17) is contained, in particular stored, in the control unit (S).

3. Latch (1) according to claim 1, **characterized in that** the closing device (9) has a drive member (12, 13), in particular a Bowden cable, and an abutment, with at least one spring between the drive member and the abutment, and a drive member sensor (20), it being possible for an application of force to the drive member, in particular a voltage (U), to be detected by means of the drive member sensor (20).

4. Latch (1) according to any of claims 1 to 3, **characterized in that**, if a current and/or speed and/or voltage difference (ΔI, ΔU, Δn) is detected as a deviation from the setpoint value curve (24, 25, 28), the power supply to the closing device (9) is cut off or the closing device (9) is reversed.

5. Latch (1) according to any of claims 1 to 4, **characterized in that** at least one switching means (18, 19, 20) for determining an open position and/or a pre-ratchet position (VR) and/or a main ratchet position (HR) and/or an overtravel position is provided.

6. Latch (1) according to any of claims 1 to 5, **characterized in that** the switching means (18, 19, 20) is a microswitch or a Hall sensor.

7. Latch (1) according to any of claims 1 to 6, **characterized in that** a switching threshold (29) can be determined on the basis of the setpoint value curve (24, 25, 28).

## Revendications

1. Serrure (1) pour véhicule automobile présentant un mécanisme de verrouillage (2) composé d'un loquet rotatif (3) et d'au moins un cliquet de verrouillage (4), un dispositif de fermeture (9) à entraînement électrique (17), le mécanisme de verrouillage (2) pouvant être transféré d'une position d'ouverture, en particulier d'une position de pré-encliquetage (VR), vers au moins une position d'encliquetage principale (HR) au moyen du dispositif de fermeture (9), et une unité de commande (S) destinée à l'entraînement de fermeture (9), un processus de fermeture pouvant être empêché en fonction d'une grandeur de mesure (I, U, n) de l'entraînement de fermeture (9), le processus de fermeture pouvant être empêché en fonction d'un écart (ΔI, ΔU, Δn) déterminable par rapport à une courbe de consigne (24, 25, 28), le processus de fermeture pouvant être empêché en fonction d'une différence de courant (ΔI) et/ou d'une différence de vitesse de rotation (Δn) et/ou d'une différence de tension (ΔU) en tant qu'écart par rapport à la courbe de consigne (24, 25, 28), **caractérisée en ce qu'**un capteur de loquet rotatif (18) est prévu, une position de fermeture (VR, HR) du loquet rotatif (3) pouvant être déterminée au moyen du capteur de loquet rotatif (18), une protection anti-blocage pouvant être activée ou désactivée en fonction du signal du capteur de loquet rotatif (18).

2. Serrure (1) selon la revendication 1, **caractérisée en ce qu'**une courbe de consigne (24, 25, 28) pour une vitesse de rotation (n) et/ou une consommation de courant (I) de l'entraînement électrique (17) est contenue, en particulier enregistrée, dans l'unité de commande (S).

3. Serrure (1) selon la revendication 1, **caractérisée en ce que** le dispositif de fermeture (9) présente un organe d'entraînement (12, 13), en particulier un câble Bowden, et une butée, comportant au moins un ressort entre l'organe d'entraînement et la butée et un capteur d'organe d'entraînement (20), une force appliquée à l'organe d'entraînement, en particulier une tension (U), pouvant être détectée au moyen du capteur d'organe d'entraînement (20).

4. Serrure (1) selon l'une des revendications 1 à 3, **caractérisée en ce que** si une différence de courant et/ou de vitesse de rotation et/ou de tension (ΔI, ΔU, Δn) est détectée en tant qu'écart par rapport à la courbe de consigne (24, 25, 28), l'alimentation en courant du dispositif de fermeture (9) est coupée ou le dispositif de fermeture (9) est inversé.

5. Serrure (1) selon l'une des revendications 1 à 4, **caractérisée en ce qu'**au moins un moyen de commutation (18, 19, 20) permettant de déterminer une position d'ouverture et/ou une position de pré-encliquetage (VR) et/ou une position d'encliquetage principale (HR) et/ou une position de levage est fourni.

6. Serrure (1) selon l'une des revendications 1 à 5, **caractérisée en ce que** le moyen de commutation (18, 19, 20) est un micro-commutateur ou un capteur à effet Hall.

7. Serrure (1) selon l'une des revendications 1 à 6, **caractérisée en ce qu'**un seuil de commutation (29) est déterminable en fonction de la courbe de consigne (24, 25, 28).
